# FASCICULE DE BREVET EUROPEEN

(11) **EP 3 189 224 B1**
(45) Date de publication et mention de la délivrance du brevet: **19.08.2020**
(21) Numéro de dépôt: 15759747.7
(22) Date de dépôt: 02.09.2015
(51) Int. Cl.: F02G 1/043

(54) **MOTEUR À PRESSIONS D'ÉVAPORATION DIFFÉRENTIELLES**
MOTOR MIT DIFFERENTIELLEN VERDAMPFUNGSDRÜCKEN
ENGINE WITH DIFFERENTIAL EVAPORATION PRESSURES

(30) Priorité: 02.09.2014 FR 1458207
(43) Date de publication de la demande: 12.07.2017
(73) Titulaire: Willocx, Stéphane, Venice, FL 34293 (US)
(72) Inventeur: Willocx, Stéphane, Venice, FL 34293 (US)
(74) Mandataire: Hautier, Nicolas
(86) Numéro de dépôt international: PCT/EP2015/070064
(87) Numéro de publication internationale: WO 2016/034632

(56) Documents cités:
- WO-A2-2014/091496
- CH-A- 8 467
- CH-A- 20 569
- DE-B3-102005 040 866
- JP-A- H11 107 856

## Description

### DOMAINE TECHNIQUE DE L'INVENTION

Le domaine technique de l'invention est celui des machines thermiques et notamment des moteurs thermiques.

### ÉTAT DE LA TECHNIQUE

Afin de transformer de l'énergie thermique en énergie mécanique ou électrique, il est connu plusieurs types de moteurs.

Certains de ces moteurs sont réversibles et peuvent être utilisés réciproquement en générateur pour transformer de l'énergie mécanique en énergie thermique ou de pression : réfrigération et/ou compression/liquéfaction d'un gaz.

Le moteur Stirling exploite une différence de température appliquée à un gaz en enceinte fermée pour produire une énergie mécanique ou réciproquement. Un tel moteur présente l'inconvénient de nécessiter une grande différence de température pour atteindre un rendement exploitable. WO2014/091496 présente un exemple de moteur Stirling.

Le moteur Rankine présente l'inconvénient de nécessiter de nombreuses étapes de transfert d'énergie qui conduisent à un rendement faible. Il nécessite de plus une pompe de retour des condensats.

Le moteur à turbine a pour principal inconvénient un coût élevé.

Le moteur à combustion interne a connu un grand développement, du fait notamment de l'automobile, mais présente l'inconvénient de comprendre de nombreuses pièces en mouvement conduisant à un rendement faible. De plus son choix de carburants possibles est relativement réduit.

Le moteur à vapeur présente l'inconvénient de consommer, en plus d'un carburant, de l'eau.

### RÉSUMÉ DE L'INVENTION

Un objet de la présente invention est de présenter un nouveau paradigme de machine thermique, apte à être utilisée comme moteur, afin de transformer de l'énergie thermique en énergie mécanique ou électrique et réciproquement.

A cet effet l'invention prévoit, selon un mode de réalisation, un moteur comprenant :
- une enceinte comprenant un liquide et un mélange de travail comprenant au moins de la vapeur issue du liquide, l'enceinte comprenant au moins une paroi de refroidissement et au moins une paroi de chauffage;
- une source froide configurée pour refroidir l'au moins une paroi de refroidissement et le mélange de travail, la source froide et le mélange de travail étant aptes à être disposés de part et d'autre de l'au moins une paroi de refroidissement ;
- une source chaude configurée pour chauffer le liquide ou au moins une paroi de chauffage, la source chaude et le liquide étant disposés de part et d'autre de l'au moins une paroi de chauffage;
- un moyen mobile, disposé à l'intérieur de l'enceinte, mobile entre une première position et une deuxième position, le moteur étant configuré de manière à ce que :
   - l'échange thermique entre le mélange de travail et l'au moins une paroi de refroidissement dans la deuxième position est supérieure à l'échange thermique entre le mélange de travail et l'au moins une paroi de refroidissement dans la première position;
   - le moyen mobile permet le contact entre le liquide et le mélange de travail dans la première position et à ce que le moyen mobile s'interpose entre le liquide et le mélange de travail dans la deuxième position ;
- un actionneur apte à déplacer le moyen mobile de la première position à la deuxième position et réciproquement ;
- au moins un cylindre comprenant au moins un piston, ledit piston étant différent du moyen mobile et de l'actionneur, une chambre dudit cylindre étant fluidiquement connectée à l'enceinte, de manière à être en contact avec le mélange de travail et dans lequel, le moteur est configuré pour que les conditions de température et de pression appliquées au liquide lors du fonctionnement dudit moteur restent inférieures aux conditions de température et de pression permettant l'ébullition dudit liquide.

Ce moteur, que l'on peut nommer moteur à pressions d'évaporation différentielles, exploite efficacement la phase à variation non linéaire de la montée en pression et également la phase à variation non linéaire de la dépression. Il tire avantageusement bénéfice du changement d'état (liquide à gazeux) d'un liquide, produisant une forte variation de pression pour une faible variation de température, à une température proche et inférieure de sa température d'ébullition. De ce fait ce moteur peut fonctionner à une température relativement faible et ne nécessite qu'une faible différence de température (entre sa source chaude et sa source froide) afin d'obtenir un rendement exploitable.

Par exemple, ce moteur ne nécessite qu'une différence de température d'environ 50 degrés entre sa source chaude et sa source froide afin d'obtenir un rendement exploitable.

Une telle disposition présente de nombreux avantages.

Le moteur, de par la présence de vapeur, présente une bonne capacité de transfert thermique, qui lui confère un rendement élevé.

Le moteur comporte peu de pièces, présente une complexité faible, et peut ainsi être réalisé à faible coût.

Le moteur présente encore l'avantage de pouvoir fonctionner avec tout type de source d'énergie thermique.

Selon un autre mode de réalisation, l'invention est aussi relative à un ensemble moteur comprenant au moins deux moteurs selon l'invention, fonctionnant en opposition de phase, où les moyens mobiles desdits au moins deux moteurs sont mécaniquement reliés afin de compenser leur masse en mouvement respective. Cette solution avantageuse permet d'accroitre le rendement du moteur.

De plus l'invention est relative au procédé de commande d'un moteur dans lequel tout au long du fonctionnement on applique au liquide des conditions de température et de pression de manière à ce que le liquide n'entre pas en ébullition. Ce procédé est particulièrement important pour conserver le rendement du moteur.

De manière optionnelle, l'invention peut comprendre au moins une des caractéristiques suivantes qui peuvent être prises séparément ou en combinaison :
- le mélange de travail est composé d'au moins un gaz et de la vapeur issue du liquide, le gaz étant différent de la vapeur.
- pour une même augmentation de la température, la pression de la vapeur du liquide augmente plus rapidement la pression du mélange de travail que la seule pression du gaz.

- la deuxième position est configurée de manière à ce que le moyen mobile empêche ou réduise la formation de vapeur issu du liquide.
- le moteur est configuré de manière à ce que dans la première position le moyen mobile minimise le volume d'échange thermique entre le mélange de travail et les parois de refroidissement et à ce que dans la deuxième position le moyen mobile maximise le volume d'échange thermique entre le mélange de travail et les parois de refroidissement.
- le moteur est configuré de manière à ce que dans la première position le moyen mobile minimise le volume d'échange thermique entre le mélange de travail et l'au moins une paroi de refroidissement et à ce que dans la deuxième position le moyen mobile maximise le volume d'échange thermique entre le mélange de travail et l'au moins une paroi de refroidissement.
- la surface d'échange thermique entre le mélange de travail et la source froide est au moins cinq fois supérieure à la surface d'échange thermique entre le mélange de travail et la surface du liquide.
- le moyen mobile s'interpose entre les parois de refroidissement et le mélange de travail dans la première position et permette le contact entre le mélange de travail et les parois de refroidissement dans la deuxième position.
- l'enceinte comprend au moins une portion d'enceinte à l'intérieure de laquelle le liquide est présent et en ce que la source chaude chauffe le liquide présent dans cette portion d'enceinte.
- la source chaude est au contact de l'au moins une paroi de chauffage également appelée paroi chaude.
- l'au moins une paroi de refroidissement de l'enceinte et la première paroi du moyen mobile présentent des formes coniques d'axe sensiblement parallèle au déplacement du moyen mobile.
- le moteur est configuré de manière à contrôler la source chaude de sorte à ce que la température du liquide reste inférieure à sa température d'ébullition dans les conditions de pressions d'utilisation.
- les conditions de température et de pression appliquées au liquide sont telles que pour une pression donnée, la température du liquide est comprise entre 1.0*Tli et 0.98*Teb, Teb étant la température d'ébullition pour cette pression et Tli étant la température de liquéfaction pour cette pression.
   Ainsi, on s'approche au plus près du point d'ébullition sans jamais atteindre ce dernier. Cela permet de travailler dans des conditions où la variation de pression est maximale pour une variation donnée de température. Cela permet par conséquent de ne pas dépasser la production de vapeur à refroidir. On améliore ainsi le rendement de la machine ;
- le volume d'échange thermique entre le liquide et le mélange de travail est supérieur dans la première position au volume d'échange thermique entre le liquide et le mélange de travail dans la deuxième position.
- le moteur est configuré de manière : à ce que le moyen mobile s'interpose entre l'au moins une paroi de refroidissement et le mélange de travail dans la première position et permette le contact entre le mélange de travail et l'au moins une paroi de refroidissement dans la deuxième position.
- le moyen mobile comprend une première paroi de forme complémentaire de la forme de l'au moins une paroi de refroidissement et configurée pour recouvrir au moins une partie de l'au moins une paroi de refroidissement dans la première position et à libérer ou découvrir au moins une partie de l'au moins une paroi de refroidissement dans la deuxième position.
- le moyen mobile comprend une deuxième paroi conformée pour libérer ou découvrir au moins une partie de la surface du liquide dans la première position et pour recouvrir au moins une partie de la surface du liquide dans la deuxième position.
- la première paroi et/ou la deuxième paroi, présente(nt) une forme creuse
- la première paroi et/ou la deuxième paroi, présente(nt) une forme creuse sont dans des matériaux légers et résistants à la déformation.
- et où une paroi de chauffage réalise l'interface entre la source chaude et le liquide, et où la paroi froide et/ou la paroi de chauffage sont formés en cuivre, en graphite ou tout autre matériaux composites ;
- le moyen mobile, particulièrement la première paroi et/ou la deuxième paroi sont dans un matériau plus léger que l'acier, typiquement un matériau en fibres de carbone ou un matériau composite.
- la forme de la paroi de refroidissement et la forme complémentaire de la première paroi en regard sont optimisées pour augmenter la surface libérée par le déplacement du moyen mobile.
- lesdites formes sont coniques d'axe sensiblement parallèle au déplacement du moyen mobile.
- l'enceinte comprend, au contact de la surface du liquide, une paroi percée, une grille, et sur le pourtour de la surface du liquide, un rebord anti remous.
- le liquide est de l'eau et où le gaz est de l'air, de l'azote, du dioxyde de carbone, de l'hydrogène ou de l'hélium ou un mélange de ces gaz.
- l'actionneur est indépendant du piston.
- l'actionneur est entraîné indirectement par le piston.
- Une paroi de chauffage réalise l'interface entre la source chaude et le liquide, et où la paroi froide et/ou la paroi de chauffage présente(nt) une conductivité thermique élevée grâce à leur composition en cuivre ou en graphite ou en tous matériaux composites présentant une conductivité thermique élevée.
- Le refroidissement intermittent du mélange permet de provoquer une variation de pression du mélange. La couverture de la surface chaude n'est pas indispensable. Il faut néanmoins un déplacement du mélange dans les zones chaudes et froides pour l'échange thermique.
- les conditions de température et de pression appliquées au liquide sont telles que pour une pression donnée, la température du liquide est comprise entre 1.0*Tli et 0.98*Teb, Teb étant la température d'ébullition et Tli étant la température de liquéfaction pour cette pression donnée.
- une enceinte étanche et rigide comprenant un liquide et un mélange de travail composé d'au moins un gaz et de la vapeur issue du liquide, le au moins un gaz étant différent de la vapeur et dans laquelle pour une même augmentation de la température, la pression de la vapeur augmente plus rapidement la pression du mélange de travail que la pression seule du gaz.

Selon un autre mode de réalisation, l'invention porte sur un procédé de commande d'un moteur selon l'invention, dans lequel les conditions appliquées au liquide lors du fonctionnement, de préférence tout au long du fonctionnement ou au moins tout au long d'un cycle complet de fonctionnement, restent inférieures aux conditions d'ébullition du liquide, de manière à ce que le liquide n'entre pas en ébullition.

Selon l'invention, les conditions de température et de pression appliquées au liquide sont telles que pour une pression donnée, la température du liquide ne provoque pas l'ébullition du liquide.

### BRÈVE DESCRIPTION DES FIGURES

D'autres caractéristiques, détails et avantages de l'invention ressortiront plus clairement de la description détaillée donnée ci-après à titre indicatif en relation avec des dessins sur lesquels :

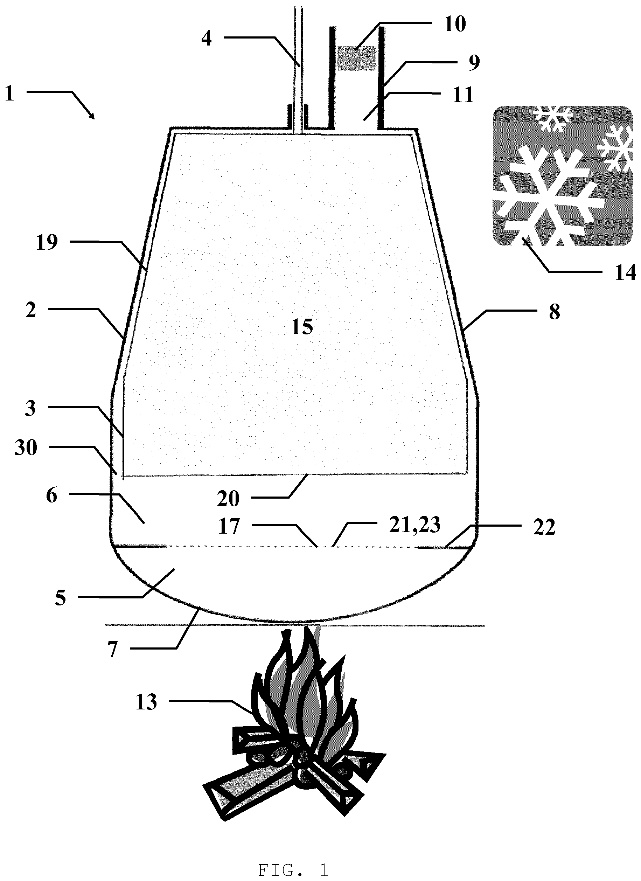

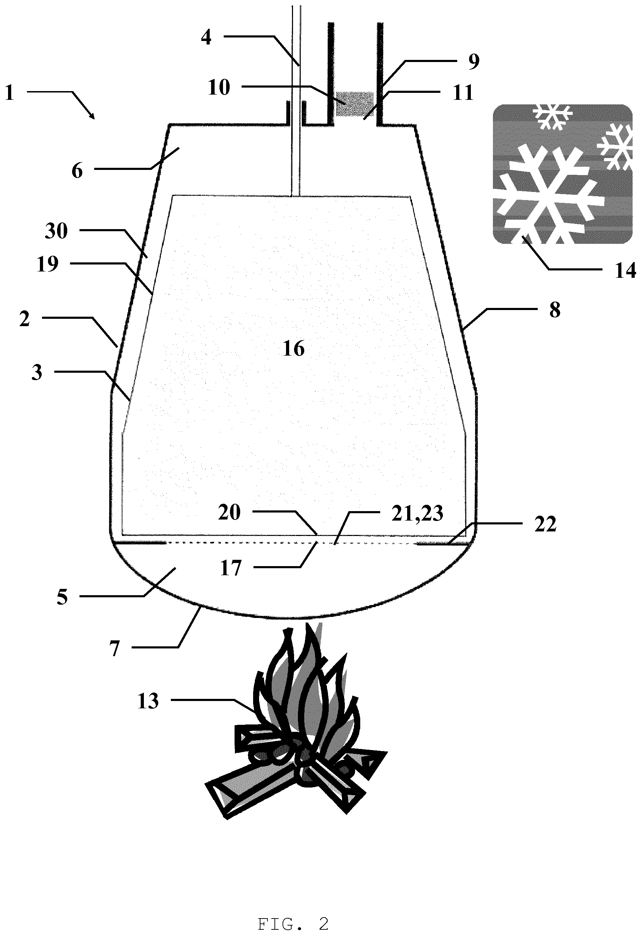

- les figures 1 et 2 présentent le principe de fonctionnement du moteur selon un mode de réalisation de l'invention,
- la figure 1 illustre la phase de pression, et
- la figure 2 illustre la phase de dépression,
- la figure 3 illustre un autre mode de réalisation,
- la figure 4 illustre un couplage entre deux moteurs,
- la figure 5 est un diagramme température pression de la vapeur et d'un gaz d'un exemple de mélange de travail selon l'invention,

### DESCRIPTION DÉTAILLÉE DE L'INVENTION

Tel que représentée aux figures 1 et 2, selon un mode de réalisation possible, la machine thermique/le moteur 1 selon l'invention comprend une enceinte étanche et rigide 2,7,8. Cette enceinte 2,7,8 comprend une chambre de travail 30 contenant un mélange de travail 6 composé d'un gaz et de vapeur issue d'un liquide 5. Dans la chambre de travail 30 est encore disposé un moyen mobile 3.

Selon un premier mode de réalisation illustré en figures 1 à 4, l'enceinte 2,7,8, est fermée et étanche, tant aux liquides qu'aux gaz. Par ailleurs, dans l'enceinte 2,7,8 est placé un liquide 5 dont est issu la vapeur. Cette étanchéité de l'enceinte 2,7,8 permet un fonctionnement du moteur 1 en circuit fermé. Ainsi, pour fonctionner, aucune entrée ou sortie de mélange ou de liquide n'est nécessaire.

Ainsi, dans ce mode de réalisation l'enceinte 2,7,8 contient la chambre de travail 30 ainsi qu'un volume à l'intérieur duquel est contenu le liquide 5. L'enceinte comprend notamment les parois 7 et 8.

Tel que représenté sur les figures 1,2, le liquide occupe et remplit une partie formant un réservoir de liquide, ici la partie basse, de l'enceinte 7. Le mélange de travail 6 occupe et remplit le reste du volume intérieur de l'enceinte 2,7,8, non occupé par le moyen mobile 3. Naturellement, du liquide peut être présent sur les parois du reste de l'enceinte, notamment du fait de la condensation de la vapeur au niveau des parois de refroidissement 2 et 8. Cet éventuel liquide issu de la condensation est présent en quantité bien inférieure au liquide présent dans le réservoir contenant défini par l'enceinte 7.

Le fonctionnement de la machine thermique/du moteur 1 nécessite la présence d'au moins une source chaude 13 et d'au moins une source froide 14. Dans un mode de réalisation préféré, une seule source chaude 13 par enceinte 2,7,8 est présente dans toute l'invention. Ainsi, dans ce mode de réalisation, la source chaude 13 est apte à chauffer le liquide 5. La source chaude 13 est préférentiellement appliquée au chauffage du liquide 5, afin de permettre la formation de vapeur à la surface du liquide 5. La source froide 14 est apte à refroidir les parois de refroidissement 2,8 de l'enceinte, et ainsi le mélange de travail 6. En effet, la source froide 14 n'est pas en contact direct avec le mélange de travail 6. Ce sont les parois de refroidissement 2,8 qui permettent le refroidissement du mélange de travail 6. Ainsi, lors de la suite de la description, lorsque l'on parle de contact entre la source froide 14 et le mélange de travail 6, il faut comprendre « contact indirect » et que les parois de refroidissement 2,8 sont intercalées entre la source froide 14 et le mélange de travail 6. Cela est clairement illustré sur les figures 1 et 2 où apparaissent la source froide 14 et les parois de l'enceinte. La source froide 14 est préférentiellement appliquée sélectivement au refroidissement du mélange de travail 6, comme il va être décrit plus loin.

Le moyen mobile 3 est entièrement contenu dans l'enceinte 2,7,8, et est mobile dans l'enceinte 2,7,8, entre une première position 15 et une deuxième position 16. Cette mobilité a pour but de déplacer le mélange de travail 6. Le moyen mobile 3 présente un volume idéalement constant.

Avantageusement selon un mode de réalisation, le piston 10 et le moyen mobile 3 sont distincts. Ils ne sont pas couplés mécaniquement. Ils ne sont pas solidaires. De même l'actionneur 4 apte à déplacer le moyen mobile 3 de la première position 15 à la deuxième position 16 et réciproquement n'est pas solidaire en déplacement du piston 10.

Dans la première position 15, illustrée à la figure 1, correspondant à une phase de pression, le moyen mobile 3 est placé de telle manière à ce qu'il minimise le contact entre mélange et les parois de refroidissement 2,8 et donc minimise l'échange thermique entre le mélange de travail 6 et la source froide 14, et à ce qu'il maximise l'échange thermique entre le liquide 5 et le mélange de travail 6. Pour ce faire, le moyen mobile 3 va avantageusement recouvrir une partie au moins des parois de refroidissement 2,8 et augmenter le volume de l'enceinte 2,7,8 situé au-dessus du liquide 5. Ainsi, dans cette première position 15, le liquide 5 chauffé par la source chaude 13 et présentant un contact avec le mélange de travail 6 tend à fournir de la vapeur dans le mélange de travail 6. Le contact entre le mélange de travail 6 et les parois de refroidissement refroidies par la source froide 14 étant minimum ou inexistant, le mélange de travail 6 est peu ou pas refroidi. Il s'ensuit que la pression, principalement du mélange de travail 6, augmente dans l'enceinte 2,7,8, dans cette configuration liée à la première position 15.

Dans la deuxième position 16, illustrée à la figure 2, correspondant à une phase de dépression, le moyen mobile 3 est placé de telle manière à ce qu'il maximise le contact entre le mélange de travail 6 et les parois de refroidissement 2, 8 entrainant de ce fait une augmentation de l'échange thermique entre le mélange de travail 6 et la source froide 14, et à ce qu'il s'interpose entre le liquide 5 et le mélange de travail 6 de manière à réduire voire à supprimer l'échange thermique entre le mélange de travail 6 et le liquide 5 chauffé par la source chaude 13 . Ainsi, dans cette deuxième position 16, le contact entre le liquide 5 et le mélange de travail 6 étant minimum voire inexistant, et que par ailleurs une large partie du mélange de travail étant en contact avec les parois de refroidissement 2,8 l'apport de vapeur du liquide 5 dans le mélange est réduit au minimum. Parallèlement, le contact entre le mélange de travail 6 et la source froide 14 est maximum, causant un refroidissement du mélange de travail 6. Il s'ensuit que la pression du mélange de travail 6, diminue dans l'enceinte 2,7,8, dans cette configuration liée à la deuxième position 16.

Afin de déplacer le moyen mobile 3 alternativement de la première position 15 à la deuxième position 16, puis de la deuxième position 16 à la première position 15, la machine thermique/le moteur 1 comprend encore un actionneur 4.

Le mouvement employé entre la première position 15 et la deuxième position 16 peut être quelconque. Ce mouvement peut, par exemple, être le résultat d'une rotation, un mouvement hélicoïdal ou encore une translation. Le mouvement pour passer de la première position 15 à la deuxième position 16 peut être le mouvement inverse du mouvement employé pour passer de la deuxième position 16 à la première position 15 ou un mouvement différent. Ce qui importe est que le moyen mobile 3 occupe alternativement la première position 15, créant ainsi une augmentation de la pression à l'intérieur de l'enceinte 2,7,8, et la deuxième position 16, créant ainsi une diminution de la pression ou dépression à l'intérieur de l'enceinte 2,7,8.

Ainsi, au moyen d'une source chaude 13, chauffant le liquide 5 et d'une source froide 14 permanente, refroidissant sélectivement le mélange de travail 6, il est créé au sein de l'enceinte 2,7,8, une variation de pression alternative. Il convient de noter que la variation de pression obtenue est importante, y compris pour une variation de température, différence entre la température de la source chaude 13 et la température de la source froide 14, relativement faible. En effet, le moteur 1 tire profit d'un gradient de pression relativement à la température important lorsque la température est proche de la température d'ébullition du liquide 5, tout en restant inférieure à cette température d'ébullition.

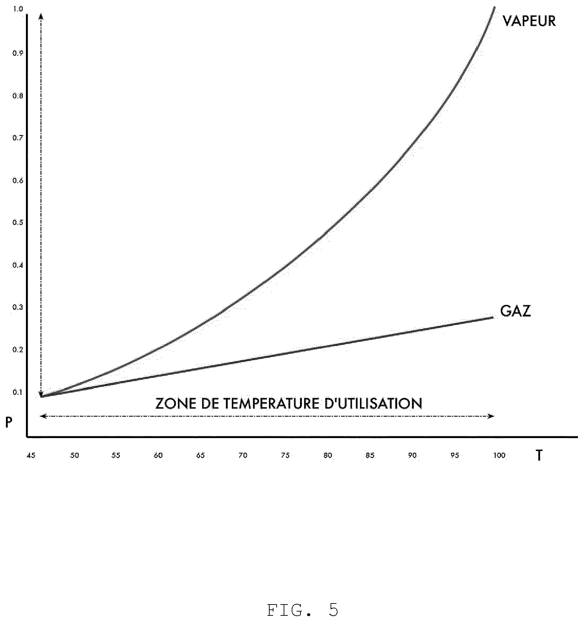

La figure 5 est un diagramme température/pression pour respectivement un gaz et de la vapeur d'un exemple de mélange de travail. Il apparaît clairement sur ce diagramme que la pression de vapeur (saturante) augmente de façon non linéaire avec la température. Pour une même augmentation de température, l'augmentation de la pression de la vapeur est bien plus importante lorsque que l'on se rapproche du point d'ébullition. Cela n'est pas le cas pour le gaz du mélange.

De manière générale, l'invention exploite le fait que quand le volume du mélange gaz/vapeur est dans la partie chaude, il y a plus de vapeur que quand il est dans la partie froide, car la température favorise le changement de l'état liquide à l'état vapeur. Il y a donc un changement de ratio gaz/vapeur pendant le cycle. La quantité de gaz reste constante et la quantité de vapeur varie. La pression du gaz augmente linéairement avec la température tandis que la vapeur augmente selon une courbe ascendante, de pente significativement plus importante. Le diagramme de la figure 5 montre que la différence de pression de la vapeur augmente près de cinq fois plus que celle du gaz dans les mêmes conditions. La pression du mélange de travail sera dépendante de la variation du ratio quantité gaz/vapeur.

L'invention utilise cet avantage dans les deux phases, c'est-à-dire lors de la phase de pression et lors de la phase de dépression.

L'invention utilise principalement les variations de pressions de vapeur pour obtenir un meilleur rendement que les moteurs Stirling ou moteurs à vapeur.

On ne peut pas considérer le mélange comme un gaz homogène, mais comme un mélange gazeux, la quantité vapeur étant la conséquence momentanée de changement d'état d'une partie du liquide.

Le moteur 1 peut fonctionner au-delà de la température d'ébullition du liquide 5, cependant la surproduction de vapeur devient alors préjudiciable au rendement. Aussi le moteur 1, ses composants, les caractéristiques thermiques du liquide 5, du mélange de travail 6, les capacités thermiques de la source chaude 13 et de la source froide 14, sont avantageusement calculés et dimensionnés afin que les conditions de température et de pression de fonctionnement restent inférieures aux conditions de température et de pression d'ébullition du liquide 5.

Une optimisation consiste à approcher au plus près les conditions de température et de pression d'ébullition du liquide 5 par valeur inférieure et sans atteindre le point d'ébullition.

Le moteur 1, tel que décrit jusqu'ici, permet de créer, au sein de l'enceinte 2,7,8 une variation de pression alternative. Selon un mode de réalisation, cette pression alternative peut être mise à profit, au moyen d'une enceinte 2 déformable, qu'elle soit souple, ou télescopique, afin d'obtenir une variation de volume alternative.

Selon un autre mode de réalisation, le moteur 1 comprend un cylindre 9. Ce cylindre 9 comprend un volume intérieur cylindrique, accueillant un piston 10, ledit piston 10 étant apte à coulisser, sensiblement selon un mouvement de translation selon une direction confondue avec l'axe du volume cylindrique. Un tel cylindre 9 définit, deux chambres de part et d'autre du piston 10 qui les sépare. Une chambre 11, parmi ces deux chambres, est fluidiquement connectée à l'enceinte 2,7,8. Cette connexion fluidique est telle que la chambre 11 soit en contact avec le mélange de travail 6, contenu dans ladite enceinte 2,7,8.

Avantageusement et contrairement à ce que pourrait laisser penser les figures 1,2, la connexion entre l'intérieur de l'enceinte 2,7,8, contenant le mélange de travail 6, et la chambre 11 du cylindre 9 est préférentiellement permanente. Ainsi la surface supérieure du moyen mobile 3, y compris dans la première position 15, n'obture en rien la connexion. Une connexion est assurée dans un plan non visible sur la figure ou encore au moyen d'une canalisation non représentée.

Le but du cylindre 9 est de mettre à profit la variation alternative de la pression créée dans l'enceinte 2,7,8, pour entraîner le piston 10 dans un mouvement alternatif linéaire. Ainsi dans la phase de pression, illustrée à la figure 1, le moyen mobile 3 étant dans la première position 15, la pression augmente et repousse le piston 10, qui est entraîné de manière centrifuge, soit vers le haut dans le plan de la figure. Au contraire, dans la phase de dépression, illustrée à la figure 2, le moyen mobile 3 étant dans la deuxième position 15, la pression diminue et attire le piston 10, qui est entraîné de manière centripète, soit vers le bas dans le plan de la figure. Ainsi l'alternance des positions du moyen mobile 3, parmi la première position 15 et la deuxième position 16, produit un mouvement alternatif linéaire du piston 10.

Un tel piston 10 constitue l'organe de sortie du moteur 1. Le mouvement alternatif linéaire peut être exploité, en tant que tel, afin de produire un mouvement mécanique alternatif linéaire. Alternativement, le mouvement du piston 10 peut être transformé, par exemple au moyen d'un dispositif bielle/vilebrequin, en un mouvement rotatif pour des applications d'entrainement rotatif, de mobilité ou encore de production électrique. Alternativement, le mouvement alternatif du piston 10 peut être directement employé pour produire de l'électricité au moyen d'un alternateur linéaire : dans ce cas le piston 10 comprend ou entraîne un noyau magnétique déplacé dans un bobinage adapté. Alternativement, le piston 10 comprend ou entraîne un bobinage.

Comme on peut le voir, le présent moteur 1 est potentiellement candidat à de très nombreuses applications.

Afin qu'un maximum de la variation de pression soit dirigée vers le cylindre 9 et le piston 10, censé être le seul élément pouvant être mobilisé en réponse à la pression variable, les autres composants, que sont ici l'enceinte 2,7,8, et le moyen mobile 3 sont idéalement indéformables et avantageusement suffisamment rigides pour résister aux variations de pression, rencontrées lors du fonctionnement du moteur 1.

Un tel moteur 1 présente un rendement d'autant meilleur que son bilan énergétique est favorable. Ce bilan est amélioré en maximisant l'énergie produite au niveau du cylindre 9 et du piston 10 et en minimisant l'énergie consommée. L'énergie consommée est d'une part l'énergie apportée thermiquement, au niveau de la source chaude 13 et de la source froide 14, et d'autre part l'énergie nécessaire à l'actionneur 4 pour mobiliser le moyen mobile 3. Quel que soit le mode de réalisation de l'actionneur 4, décrit plus loin, la minimisation de cette énergie de mise en mouvement bénéficie d'un moyen mobile 3 le plus léger possible, afin que la masse mise en mouvement soit faible et que l'énergie de mise en mouvement soit réduite.

Le choix des matériaux est important. Seule la surface externe du moyen mobile 3 est fonctionnelle. Aussi le moyen mobile 3 peut avantageusement être creux, pour peu que ses parois répondent aux contraintes mécaniques vues précédemment (résistance à la pression) et aux contraintes thermiques décrites plus avant.

Il peut être compris de la description qui précède que le cycle du moteur 1 est piloté par le mouvement du moyen mobile 3. Ainsi la loi de commande de l'actionneur 4 est déterminante pour le moteur 1. Selon un premier mode de réalisation l'actionneur 4 est indépendant. Dans ce mode la loi de commande de l'actionneur est quelconque. Selon un mode préférentiel, ladite loi de commande est optimisée pour tirer parti au maximum du comportement thermodynamique de l'enceinte 2 et de son contenu. Ainsi, par exemple, la fréquence de pilotage de l'actionnaire 4 est avantageusement déterminée en fonction des constantes de temps des phases de pression et de dépression. La forme de la loi de commande, tant en pression, qu'en dépression, peut encore être avantageusement adaptée aux caractéristiques thermodynamiques.

Un inconvénient évident du mode de réalisation précédent est lié à son avantage. L'indépendance de l'actionneur 4 est qu'il nécessite un générateur de mouvement alternatif propre. Aussi une idée est d'utiliser le mouvement alternatif disponible en sortie du moteur 1, au niveau du cylindre 9 et du piston 10, afin de prélever une partie de l'énergie disponible pour entraîner le moyen mobile 3. Un tel mode de réalisation nécessite une adaptation de phase entre le mouvement du piston 10 et le mouvement à appliquer au moyen mobile 3. Ainsi dans la configuration illustrée, où l'axe du cylindre 9 est confondue avec l'axe de déplacement du moyen mobile 3, il convient d'appliquer un déphasage de π/2 radians avec avance pour le moyen mobile 3. L'inconvénient de ce mode de réalisation est qu'il semble actuellement difficile d'obtenir ainsi un rendement optimum.

Il convient de noter, qu'un tel mode de réalisation, et ceci constitue un autre avantage important d'un tel moteur 1, permet de réaliser un moteur capable d'auto-démarrer.

L'actionneur 4 peut être réalisé selon de nombreux modes. La fonction de l'actionneur 4 est de déplacer le moyen mobile 3 relativement à l'enceinte 2,7.

L'enceinte 2,7,8 doit, dans la mesure du possible, rester fermée et étanche. Aussi, afin de ne pas présenter d'interface mécanique traversant la paroi de l'enceinte 2,7,8, un premier mode de réalisation consiste à placer l'élément actif de l'actionneur 4 : vérin, moteur rotatif, moteur linéaire ou autre, à l'intérieur de l'enceinte 2,7,8. Ceci peut être rendu délicat par les conditions de température et de pression à l'intérieur de l'enceinte 2,7,8 et de création de volume parasite.

Selon un autre mode de réalisation, ne présentant pas non plus d'interface mécanique traversant la paroi de l'enceinte 2,7,8, l'élément actif de l'actionneur 4 est disposé à l'extérieur de l'enceinte 2,7,8 et mobilise le moyen mobile 3 sans contact. Ceci est typiquement réalisé par un moyen magnétique, agissant sur un moyen mobile 3 aimanté ou au moins partiellement ferreux. Un tel mode de réalisation est d'autant plus réalisable que le moyen mobile 3 présente une masse faible.

Enfin, selon encore un autre mode de réalisation, tel qu'illustré sur les figures, l'élément actif de l'actionneur 4 est disposé à l'extérieur de l'enceinte 2,7,8 et un moyen d'actionnement mécanique, traverse la paroi de l'enceinte 2,7,8. Dans ce mode, le passage de paroi doit être étudié pour ne pas pénaliser l'étanchéité.

Il convient de noter que les trois modes de réalisation précédemment décrit pour l'actionneur 4, peuvent être appliqués, bien évidemment, à un actionneur 4 indépendant, mais peuvent aussi être appliqués dans le cas d'un couplage avec le piston 10.

Revenons plus en détail sur la réalisation du moyen mobile 3. Tel que décrit précédemment, dans la première position 15, le moyen mobile 3 minimise le contact entre le mélange de travail 6 et la source froide 14, et maximise le contact entre le liquide 5 et le mélange de travail 6. Au contraire, dans la deuxième position 16, le moyen mobile 3 maximise le contact entre le mélange de travail 6 et la source froide 14, et minimise le contact entre le liquide 5 et le mélange de travail 6.

Pour cela, selon un mode de réalisation, le moyen mobile 3 est conformé de telle manière à s'interposer entre la source froide 14 et le mélange de travail 6 et à permettre le contact entre le liquide 5 et le mélange de travail 6, dans la première position 15, afin d'agir sur les deux moyens qui contribuent à augmenter la pression dans l'enceinte 2,7,8. Le moyen mobile 3 est encore conformé de telle manière à permettre le contact entre le mélange de travail 6 et la source froide 14 et à s'interposer entre le liquide 5 et le mélange de travail 6 dans la deuxième position 16, afin d'agir sur les deux moyens qui contribuent à diminuer la pression dans l'enceinte 2,7,8.

Selon un mode de réalisation, l'enceinte 2,7,8 comprend une paroi froide 2,8, également désignée paroi de refroidissement, refroidie par la source froide 14. Dans ce mode, le moyen mobile 3 comprend une première paroi 19 de forme complémentaire de la forme de la paroi froide 2,8. Ladite première paroi 19 est apte à recouvrir, tout ou partie de la paroi froide 2,8 dans la première position 15. Ainsi tel qu'illustré à la figure 1, le moyen mobile 3 dans la première position 15 est placé en haut et sa première paroi 19 vient se superposer et recouvrir la paroi froide 2,8. Ce faisant, le moyen mobile 3 s'interpose entre le mélange de travail 6 et la source froide 14 et réduit ou empêche le refroidissement du mélange de travail 6. Au contraire, dans la deuxième position 16, la première paroi 19 libère la paroi froide 2,8. Ainsi tel qu'illustré à la figure 2, le moyen mobile 3 dans la deuxième position 16 est placé en bas et sa première paroi 19 est éloignée de la paroi froide 2,8. Ce faisant, le moyen mobile 3 libère un espace interstitiel entre la première paroi 19 et la paroi froide 2,8 et permet au mélange de travail 6, qui occupe naturellement tout l'espace disponible, de venir au contact de la paroi froide 2,8 et ainsi de se refroidir. Dans l'exemple illustré, cette fonction est assurée par la première paroi 19 disposée dans la partie haute du moyen mobile 3.

Parallèlement, le moyen mobile 3 comprend encore une deuxième paroi 20 de forme complémentaire de la forme de la surface 17 du liquide 5. Ladite deuxième paroi 20 est apte à recouvrir, tout ou partie de la surface 17 du liquide dans la deuxième position 16. Ainsi tel qu'illustré à la figure 2, le moyen mobile 3 dans la deuxième position 16 est placé en bas et sa deuxième paroi 20 vient se superposer et recouvrir la surface 17 du liquide 5. Ce faisant, le moyen mobile 3 s'interpose entre le liquide 5 et le mélange de travail 6 et réduit l'apport de vapeur dans le mélange de travail. Au contraire, dans la première position 15, la deuxième paroi 20 libère la surface 17 du liquide 5. Ainsi tel qu'illustré à la figure 1, le moyen mobile 3 dans la première position 15 est placé en haut et sa deuxième paroi 20 est éloignée de la surface 17 du liquide 5. Ainsi l'apport de vapeur dans le mélange de travail augmente et l'augmentation de pression s'accélère. Dans l'exemple illustré, cette fonction est assurée par la deuxième paroi 20 disposée dans la partie basse du moyen mobile 3.

Afin d'augmenter le rendement thermique du moteur 1, il est avantageux que le moyen mobile 3 assure une fonction d'isolant thermique, et qu'il présente une isolation thermique élevée. Cette caractéristique est au minimum réalisée pour les parois thermiquement fonctionnelles, soit pour la première paroi 19, ou pour la deuxième paroi 20, et avantageusement pour les deux parois 19, 20.

De manière similaire, à la paroi froide 2,8 précédemment décrite, une paroi chaude 7, également désignée paroi de chauffage, réalise l'interface et la séparation entre la source chaude 13 et le liquide 5. Afin de ne pas grever le bilan de transfert thermique, la paroi froide 2,8, ou la paroi de chauffage 7, et avantageusement les deux parois 7 et 2,8, présente(nt) une conductivité thermique élevée.

Le mode de réalisation de la source chaude 13 et de la source froide 14 n'a pas encore été détaillé. La source froide la plus simple, comprend l'air ambiant autour de la paroi froide 2,8 de l'enceinte 2,7,8. En fonction des dimensions du moteur 1, un volume suffisant d'air ambiant et la convexion naturelle peuvent être suffisante pour constituer une source froide 14 permettant le fonctionnement du moteur 1. En fonction des conditions d'utilisation, un autre caloporteur, tel que de l'air, de l'eau ou autre peut encore être utilisé. Une circulation forcée peut encore être comprise dans la source froide 14. Un circuit de réfrigération peut encore compléter la source froide 14.

La source chaude 13 peut aussi être réalisée selon de nombreux modes de réalisation. Le moteur 1 est un moteur du type à combustion externe. A ce titre, il présente l'avantage de ce type de moteurs, que la chaleur de la source chaude 13 peut être de provenance quelconque. Ainsi la chaleur peut provenir, de manière non limitative, d'une combustion d'un carburant fossile ou renouvelable, d'une pile nucléaire, du soleil, d'une réaction chimique exothermique, d'un moyen électrique, de la géothermie ou encore du volcanisme.

Le mode de réalisation de la source chaude 13 est encore avantageux en ce qu'il permet de nombreuses variantes. Ainsi, tel que représenté aux figures 1,2, la source chaude 13 peut être externe à l'enceinte 2,7,8, disposée par exemple sous le liquide 5, séparée de celui-ci par une paroi chaude 7. Selon un autre mode de réalisation, la source chaude 13 peut encore être plongée dans le liquide 5. Il est encore possible d'utiliser une source chaude 13 déportée, et d'employer un serpentin dans ou autour du liquide 7 comprenant un caloporteur circulant entre la source de chaleur et le liquide 5.

Ainsi un autre avantage du moteur 1 est de permettre des réalisations non polluantes. Le liquide 5 et le mélange de travail 6, contenus dans l'enceinte 2,7,8, ne la quittent pas et ne peuvent pas contaminer un environnement fragile ou à risque. Tant la source chaude 13, que la source froide 14, peuvent être des sources propres ou encore être déportées.

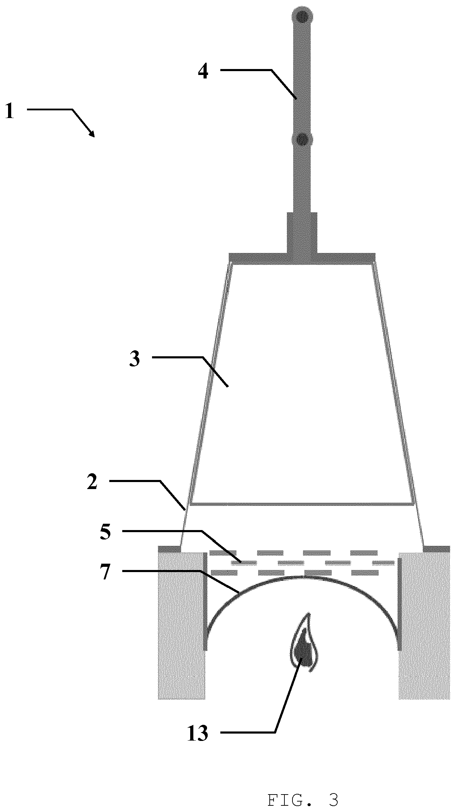

La forme de la paroi chaude 7, telle qu'illustrée aux figures 1,2, en forme de creuset (courbure vers le bas dans le plan de la figure), est purement indicative. Ainsi une forme en creuset inversé (courbure vers le haut dans le plan de la figure), telle qu'illustrée à la figure 3, s'avère intéressante en ce qu'elle concentre la chaleur de la source chaude 13.

Selon une autre caractéristique, la forme de la paroi froide 2,8 et la forme complémentaire de la première paroi 19 en regard sont optimisées pour augmenter la surface recouverte/libérée par le déplacement du moyen mobile 3. Ainsi, une inclinaison faible de la pente de ces deux formes, relativement à la direction de déplacement du moyen mobile 3, permet pour un faible déplacement du moyen mobile 3 de dégager une grande surface. Une telle inclinaison permet un mouvement dynamique aisé en limitant les effets préjudiciables de succion, de type ventouse, qui pourrait se produire. Selon un mode de réalisation, tirant profit d'une telle inclinaison, la forme de ces deux parois 2,8 et 19 en regard comprend un ou plusieurs cônes de faible angle d'ouverture.

Une telle forme conique est encore avantageuse en termes de résistance massique, en ce qu'elle permet de réaliser une enceinte 2,8 de bonne rigidité, afin de résister aux contraintes de pression, tout en conservant une épaisseur de paroi faible, afin de privilégier la conductivité thermique de la paroi froide 2,8 et/ou un moyen mobile 3 de bonne rigidité, afin de résister aux contraintes de pression, tout en conservant une épaisseur de paroi faible, afin de privilégier la faible masse.

La deuxième paroi 20 peut présenter une forme quelconque. Cependant, afin de suivre la surface 17 du liquide 5, en conditions normales de gravité, la deuxième paroi 20 présente une surface plane et sensiblement parallèle à ladite surface 17 du liquide 5.

Tel que représenté aux figures 1, 2, la partie de l'enceinte 7 qui accueille le liquide 5, soit la partie basse de l'enceinte 2,7,8 est avantageusement délimitée, au niveau de la surface 17 du liquide 5 par une paroi percée 21. Selon un autre mode de réalisation cette délimitation est assurée par une grille 23. Selon un autre mode de réalisation alternatif ou complémentaire, au niveau de la surface du liquide 17, sur son pourtour, est disposé un rebord plein anti remous 22.

L'ouverture d'entrée de la vapeur à l'intérieur de la chambre de travail 30 est donc assurée par cette délimitation, par exemple une grille 23 ou un rebord anti-remous 22 ou tout autre type d'ouverture.

Selon un mode de réalisation illustré sur les figures, chaque enceinte 2, 7, 8 comprend un seul moyen mobile 3. Chaque enceinte 2, 7, 8 comprend un seul piston 11. Chaque enceinte 2, 7, 8 comprend une seule source chaude 13.

Il a été vu que l'enceinte 2,7,8 contient un liquide 5 et sa vapeur. Il convient de comprendre ici liquide et vapeur dans les conditions de fonctionnement propres du moteur 1 (et pas nécessairement dans des conditions d'ambiance habituelles). Ainsi dans un environnement cryogénique ou spatial, le liquide peut être de l'azote sous sa forme liquide et la vapeur de l'azote sous forme gazeuse.

De nombreux choix sont possibles tant pour le liquide 5 et sa vapeur que pour le gaz additionnel.

A titre d'exemple le liquide 5 peut être de l'eau ou tout mélange liquide permettant d'adapter les conditions d'évaporations avec les conditions d'utilisation.

A titre d'exemple non limitatif, le gaz peut être de l'air, de l'azote, du dioxyde de carbone, de l'hydrogène, de l'hélium ou un mélange de ces gaz.

Il faut noter que selon un mode de réalisation la présence d'un gaz autre que le gaz issu de la vapeur du liquide 5 est présent en très petite quantité, voire est inexistante. Idéalement, il n'y a que de la vapeur de liquide et aucun autre gaz résiduel. Cette solution idéale étant impossible à réaliser, l'invention fonctionne parfaitement avec quelques gaz résiduels.

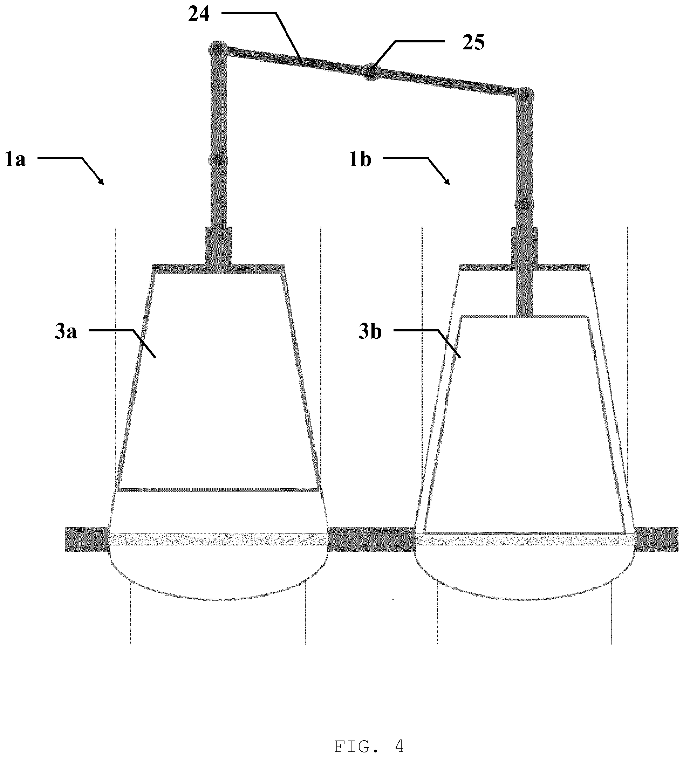

Le moteur 1 peut être couplé à un ou plusieurs autres moteurs similaires. Tel que présenté à la figure 4, un couplage comprenant deux moteurs 1a,1b similaires, un lien mécanique 24, 25 entre les moyens mobiles 3a,3b respectifs, selon un déphasage de π radians, soit en opposition de phase, par exemple réalisé au moyen d'un levier 24 articulé autour d'un axe de rotation 25, permet avantageusement de compenser mutuellement la masse de chacun des moyens mobiles 3a,3b. Avec une telle opposition de phase, le moyen mobile 3a du premier moteur 1a est dans la première position 15 lorsque le moyen mobile 3b du deuxième moteur 1b est dans la deuxième position 16 et réciproquement. Ainsi le déplacement d'un moyen mobile 3a entraîne l'autre moyen mobile 3b et annule leur masse respective, telle que vu d'un actionneur unique commun. Le couplage peut être réalisé par vilebrequin ou tout autre système permettant une synchronisation appropriée entre les moteurs.

Dans la description qui précède et qui a été faite en référence aux figures 1 à 4, l'enceinte 2,7,8 comprend le liquide dont l'échauffement génère la vapeur.

Le rendement idéal théorique d'une machine selon l'invention est meilleur que celui du moteur Stirling à vitesse de rotation égale et aux mêmes températures d'utilisations.

Selon un mode de réalisation, le système est réversible. Il a été principalement décrit précédemment dans son fonctionnement comme moteur. Selon un autre mode de réalisation il peut fonctionner comme une pompe à chaleur. Dans ce cas, il utilise la propriété endothermique de la vaporisation et exothermique de la condensation. L'évaporation est amplifiée par le brassage du mélange sur la surface du liquide dû à son déplacement et la dépression due à l'augmentation du volume par déplacement du piston.

La condensation (ou la diminution de quantité d'évaporation dans le mélange) sera amplifiée par le contact du mélange avec la grande surface, de préférence conique, et l'augmentation de pression par déplacement du piston.

La vapeur du liquide favorise la quantité d'énergie transférée.

La volatilité du liquide est aussi un élément important qui peut favoriser le rendement de la pompe à chaleur.

Bien qu'il soit décrit dans la présente un mode de réalisation préféré de l'invention, il doit être bien compris que l'invention n'est pas limitée à ce mode, et que des variations peuvent être apportées à l'intérieur de la portée des revendications suivantes.

## Revendications

1. Moteur (1) comprenant:
- une enceinte (2,7,8) comprenant un liquide (5) et un mélange de travail (6) comprenant au moins de la vapeur issue du liquide (5), l'enceinte (2,7,8) comprenant au moins une paroi de refroidissement (2,8) et au moins une paroi de chauffage (7);
- une source froide (14) configurée pour refroidir l'au moins une paroi de refroidissement (2,8) et le mélange de travail (6), la source froide (14) et le mélange de travail (6) étant aptes à être disposés de part et d'autre de l'au moins une paroi de refroidissement (2,8) ;
- une source chaude (13) configurée pour chauffer le liquide (5) ou au moins une paroi de chauffage (7), la source chaude (13) et le liquide (5) étant disposés de part et d'autre de l'au moins une paroi de chauffage (7);
- un moyen mobile (3), disposé à l'intérieur de l'enceinte (2, 7, 8), mobile entre une première position (15) et une deuxième position (16), le moteur (1) étant configuré de manière à ce que :
• l'échange thermique entre le mélange de travail (6) et l'au moins une paroi de refroidissement (2,8) dans la deuxième position est supérieure à l'échange thermique entre le mélange de travail (6) et l'au moins une paroi de refroidissement (2,8) dans la première position;
• le moyen mobile (3) permet le contact entre le liquide (5) et le mélange de travail (6) dans la première position (15) et le moyen mobile (3) s'interpose entre le liquide (5) et le mélange de travail (6) dans la deuxième position (16) ;
- un actionneur (4) apte à déplacer le moyen mobile (3) de la première position (15) à la deuxième position (16) et réciproquement ;
- au moins un cylindre (9) comprenant au moins un piston (10), ledit piston (10) étant différent du moyen mobile (3) et de l'actionneur (4), une chambre (11) dudit cylindre (9) étant fluidiquement connectée à l'enceinte (2,8), de manière à être en contact avec le mélange de travail (6)
**caractérisé en ce que** le moteur est configuré pour que les conditions de température et de pression appliquées au liquide (5) lors du fonctionnement dudit moteur restent inférieures aux conditions de température et de pression permettant l'ébullition dudit liquide.

2. Moteur (1) selon la revendication précédente, dans lequel le mélange de travail (6) est composé d'au moins un gaz et de la vapeur issue du liquide (5), le gaz étant différent de la vapeur et dans lequel de préférence pour une même augmentation de la température, la pression de la vapeur du liquide augmente plus rapidement la pression du mélange de travail que la seule pression du gaz..

3. Moteur (1) selon la revendication précédente dans lequel pour une même augmentation de la température, la pression de la vapeur du liquide augmente plus rapidement la pression du mélange de travail que la seule pression du gaz.

4. Moteur (1) selon la revendication 1 dans lequel la deuxième position (15) est configurée de manière à ce que le moyen mobile (3) empêche ou réduise la formation de vapeur issu du liquide (5) et dans lequel de préférence dans la première position le moyen mobile (3) minimise le volume d'échange thermique entre le mélange de travail (6) et l'au moins une paroi de refroidissement (2,8) et dans la deuxième position le moyen mobile (3) maximise le volume d'échange thermique entre le mélange de travail (6) et l'au moins une paroi de refroidissement (2,8).

5. Moteur (1) selon l'une quelconque des revendications précédentes, dans lequel l'enceinte (2,7,8) comprend au moins une portion d'enceinte à l'intérieure de laquelle le liquide est présent et en ce que la source chaude (13) est au contact de l'au moins une paroi de chauffage (7) et chauffe le liquide présent dans cette portion d'enceinte.

6. Moteur (1) selon la revendication précédente, dans lequel l'au moins une paroi de refroidissement (2,8) de l'enceinte (2,7,8) et la première paroi (19) du moyen mobile présentent des formes coniques d'axe sensiblement parallèle au déplacement du moyen mobile (3).

7. Moteur (1) selon l'une quelconque des revendications précédentes, configuré de manière à ce que les conditions de température et de pression appliquées au liquide sont telles que pour une pression donnée, la température du liquide (5) est comprise entre 1.0*Tli et 0.98*Teb, Teb étant la température d'ébullition pour cette pression et Tli étant la température de liquéfaction pour cette pression.

8. Moteur (1) selon l'une quelconque des revendications précédentes, configuré de manière à ce que le volume d'échange thermique entre le liquide (5) et le mélange de travail (6) est supérieure dans la première position au volume d'échange thermique entre le liquide (5) et le mélange de travail (6) dans la deuxième position.

9. Moteur (1) selon l'une quelconque des revendications précédentes, configuré de manière : à ce que le moyen mobile (3) s'interpose entre l'au moins une paroi de refroidissement (2,8) et le mélange de travail (6) dans la première position (15) et permette le contact entre le mélange de travail (6) et l'au moins une paroi de refroidissement (2,8) dans la deuxième position (16).

10. Moteur (1) selon la revendication précédente, où le moyen mobile (3) comprend une première paroi (19) de forme complémentaire de la forme de l'au moins une paroi de refroidissement (2,8) et configurée pour recouvrir au moins une partie de l'au moins une paroi de refroidissement (2,8) dans la première position (15) et à libérer ou découvrir au moins une partie de l'au moins une paroi de refroidissement (2,8) dans la deuxième position (16).

11. Moteur (1) selon l'une quelconque des deux revendications précédentes où le moyen mobile (3) comprend une deuxième paroi (20) conformée pour libérer ou découvrir au moins une partie de la surface (17) du liquide (5) dans la première position (15) et pour recouvrir au moins une partie de la surface (17) du liquide (5) dans la deuxième position (16).

12. Moteur (1) selon la revendication précédente, où le moyen mobile (3), particulièrement la première paroi (19) et/ou la deuxième paroi (20), présente(nt) une forme creuse et de préférence le moyen mobile (3), particulièrement la première paroi (19) et/ou la deuxième paroi (20) sont dans un matériau plus léger que l'acier, typiquement un matériau en fibres de carbone ou un matériau composite.

13. Ensemble moteur comprenant au moins deux moteurs (1) selon l'une quelconque des revendications précédentes, fonctionnant en opposition de phase, où les moyens mobiles (3) desdits au moins deux moteurs sont mécaniquement reliés afin de compenser leur masse en mouvement respective.

14. Procédé de commande d'un moteur (1) selon l'une quelconque des revendications précédentes dans lequel tout au long du fonctionnement on applique au liquide (5) des conditions de température et de pression de manière à ce que le liquide (5) n'entre pas en ébullition.

15. Procédé selon la revendication précédente dans lequel les conditions de température et de pression appliquées au liquide sont telles que pour une pression donnée, la température du liquide est comprise entre 1.0*Tli et 0.98*Teb, Teb étant la température d'ébullition et Tli étant la température de liquéfaction pour cette pression donnée.

## Patentansprüche

1. Motor (1), umfassend:
- ein Gehäuse (2, 7, 8) das eine Flüssigkeit (5) und ein Arbeitsgemisch (6) enthält, das mindestens Dampf aus der Flüssigkeit enthält (5), das Gehäuse (2, 7, 8) enthält mindestens eine Kühlwand (2, 8) und mindestens eine Heizwand (7);
- eine Kältequelle (14) konfiguriert zur Kühlung der mindestens einen Kühlwand (2, 8) und des Arbeitsgemischs (6), die Kältequelle (14) und das Arbeitsgemisch (6) können beiderseits der mindestens einen Kühlwand (2, 8) angeordnet werden;
- eine Wärmequelle (13), konfiguriert zur Erwärmung der Flüssigkeit (5) oder mindestens eine Heizwand (7), die Wärmequelle (13) und die Flüssigkeit (5) sind dabei beiderseits der mindestens einen Heizwand (7) angeordnet;
- eine bewegliche Vorrichtung (3), die in dem Gehäuse (2, 7, 8) positioniert ist und die sich zwischen einer ersten Position (15) und einer zweiten Position (16) bewegen kann, der Motor (1) ist dabei so konfiguriert, dass:
• der Wärmeaustausch zwischen dem Arbeitsgemisch (6) und der mindestens einen Kühlwand (2, 8) in der zweiten Position höher ist als der Wärmeaustausch zwischen dem Arbeitsgemisch (6) und der mindestens einen Kühlwand (2, 8) in der ersten Position;
• die bewegliche Vorrichtung (3) erlaubt den Kontakt zwischen der Flüssigkeit (5) und dem Arbeitsgemisch (6) in der ersten Position (15) und die bewegliche Vorrichtung (3) befindet sich zwischen der Flüssigkeit (5) und dem Arbeitsgemisch (6) in der zweiten Position (16);
- ein Aktor (4) der in der Lage ist, die bewegliche Vorrichtung (3) von der ersten Position (15) in die zweite Position (16) zu bewegen und umgekehrt.;
- mindestens ein Zylinder (9) mit mindestens einem Kolben (10), dieser Kolben (10) unterscheidet sich von der beweglichen Vorrichtung (3) und dem Aktor (4), eine Kammer (11) dieses Zylinders (9) steht in Flüssigkeitsverbindung mit dem Gehäuse (2, 8), so dass sie Kontakt mit dem Arbeitsgemisch (6) hat,
**dadurch gekennzeichnet, dass** der Motor dazu konfiguriert ist, dass die Temperatur- und Druckbedingungen, die auf die Flüssigkeit (5) beim Betrieb des Motors wirken, unter den Temperatur- und Druckbedingungen bleiben, bei denen die erwähnte Flüssigkeit zu sieden beginnt.

2. Motor (1) nach dem vorangehenden Anspruch bei dem das Arbeitsgemisch (6) mindestens aus einem Gas und Dampf aus der Flüssigkeit (5) zusammengesetzt ist, wobei sich Gas und Dampf unterscheiden, und bei der vorzugsweise für eine gleiche Temperaturerhöhung der Dampfdruck der Flüssigkeit den Druck des Arbeitsgemischs schneller steigert, als der Gasdruck alleine.

3. Motor (1) nach dem vorangehenden Anspruch bei dem bei einer gleichen Temperaturerhöhung der Dampfdruck der Flüssigkeit den Druck des Arbeitsgemischs schneller steigert, als der Gasdruck allein.

4. Motor (1) nach Anspruch 1, bei dem die zweite Position (15) so konfiguriert ist, dass die bewegliche Vorrichtung (3) die Bildung von Dampf aus der Flüssigkeit (5) verhindert oder verringert, und bei dem vorzugsweise in der ersten Position die bewegliche Vorrichtung (3) das Wärmeaustauschvolumen zwischen dem Arbeitsgemisch (6) und der mindestens einen Kühlwand (2, 8) minimiert wird und in der zweiten Position die bewegliche Vorrichtung (3) das Wärmeaustauschvolumen zwischen dem Arbeitsgemisch (6) und der mindestens einen Kühlwand (2, 8) maximiert wird.

5. Motor (1) nach irgendeinem der vorangehenden Ansprüche, bei dem das Gehäuse (2, 7, 8) mindestens einen Gehäuseabschnitt umfasst, in dessen Inneren die Flüssigkeit vorhanden ist und bei dem die Wärmequelle (13) Kontakt zu mindestens einer Heizwand (7) hat und die in diesem Gehäuseabschnitt vorhandene Flüssigkeit erhitzt.

6. Motor (1) nach dem vorangehenden Anspruch bei dem die mindestens eine Kühlwand (2, 8) des Gehäuses (2, 7, 8) und die erste Wand (19) der beweglichen Vorrichtung konische Formen haben, mit einer im Wesentlichen zur Verschiebung der beweglichen Vorrichtung (3) parallelen Achse.

7. Motor (1) nach irgendeinem der vorangehenden Ansprüche, so konfiguriert, dass die auf die Flüssigkeit wirkenden Temperatur- und Druckbedingungen derart sind, dass bei einem gegebenen Druck die Temperatur der Flüssigkeit (5) zwischen 1..0^{∗}Tli und 0.98^{∗}Teb liegt, Teb ist dabei die Siedetemperatur für diesen Druck und Tli ist die Verflüssigungstemperatur für diesen Druck.

8. Motor (1) nach irgendeinem der vorangehenden Ansprüche, so konfiguriert, dass das Wärmeaustauschvolumen zwischen der Flüssigkeit (5) und dem Arbeitsgemisch (6) in der ersten Position höher ist als das Wärmeaustauschvolumen zwischen der Flüssigkeit (5) und dem Arbeitsgemisch (6) in der zweiten Position.

9. Motor (1) nach irgendeinem der vorangehenden Ansprüche, so konfiguriert, dass die bewegliche Vorrichtung (3) sich zwischen der mindestens einen Kühlwand (2, 8) und dem Arbeitsgemisch (6) in der ersten Position (15) befindet und den Kontakt zwischen dem Arbeitsgemisch (6) und der mindestens einen Kühlwand (2, 8) in der zweiten Position (16) erlaubt.

10. Motor (1) nach dem vorangehenden Anspruch bei dem die bewegliche Vorrichtung (3) eine erste Wand (19) umfasst, deren Form zur Form der mindestens einen Kühlwand (2, 8) komplementär ist und dazu konfiguriert, mindestens einen Teil der mindestens einen Kühlwand (2, 8) in der ersten Position (15) zu bedecken und um mindestens einen Teil der mindestens einen Kühlwand (2, 8) in der zweiten Position (16) freizugeben oder unbedeckt zu lassen.

11. Motor (1) nach irgendeinem der beiden vorangehenden Ansprüche, bei dem die bewegliche Vorrichtung (3) eine zweite Wand (20) enthält, so ausgelegt, mindestens einen Teil der Oberfläche (17) der Flüssigkeit (5) in der ersten Position (15) freizugeben oder unbedeckt zu lassen und mindestens einen Teil der Oberfläche (17) der Flüssigkeit (5) in der zweiten Position (16) abzudecken.

12. Motor (1) nach dem vorangehenden Anspruch, bei dem die bewegliche Vorrichtung (3), insbesondere die erste Wand (19) und/ oder die zweite Wand (20), eine hohle Form aufweist (aufweisen) und vorzugsweise die bewegliche Vorrichtung (3) insbesondere die erste Wand (19) und/ oder die zweite Wand (20) aus einem Material bestehen, das leichter als Stahl ist, typischerweise eine Material aus Kohlenstofffasern oder ein Kompositmaterial.

13. Motorbauguppe mit mindestens zwei Motoren (1) nach irgendeinem der vorangehenden Ansprüche, die in Phasenopposition arbeitet, bei der die beweglichen Vorrichtungen (3) der genannten mindestens zwei Motore mechanisch miteinander verbunden sind, um ihre Masse in einer jeweiligen Bewegung zu kompensieren.

14. Steuerungsverfahren für einen Motor (1) nach irgendeinem der vorangehenden Ansprüche, bei dem während des gesamten Betriebs auf die Flüssigkeit (5) derartige Temperatur- und Druckbedingungen wirken, dass die Flüssigkeit (5) nicht zu sieden beginnt.

15. Verfahren nach dem vorangehenden Anspruch, bei dem die auf die Flüssigkeit wirkenden Temperatur- und Druckbedingungen derart sind, dass bei einem gegebenen Druck die Temperatur der Flüssigkeit zwischen 1.0^{∗}Tli und 0.98^{∗}Teb liegt, dabei ist Teb die Siedetemperatur und Tli die Verflüssigungstemperatur für diesen gegebenen Druck.

## Claims

1. A Motor (1) comprising:
- a housing (2, 7, 8) containing a liquid (5) and a working mixture (6) comprising at least vapour from the liquid (5), the housing (2, 7, 8) comprising at least one cooling wall (2, 8) and at least one heating wall (7);
- a cold source (14) configured to cool the at least one cooling wall (2, 8) and wherein the working mixture (6), the cold source (14) and the working mixture (6) are suitable for being disposed on either side of the at least one cooling wall (2, 8);
- a hot source (13) configured to heat the liquid (5) or at least one heating wall (7), wherein the hot source (13) and the liquid (5) are disposed on either side of the at least one heating wall (7);
- a movable means (3), arranged inside the housing (2, 7, 8), movable between a first position (15) and a second position (16), the motor (1) being configured in such a way that
• the heat exchange between the working mixture (6) and the at least one cooling wall (2, 8) in the second position is greater than the heat exchange between the working mixture (6) and the at least one cooling wall (2, 8) in the first position;
• the movable means (3) allows contact between the liquid (5) and the working mixture (6) in the first position (15) and the movable means (3) is interposed between the liquid (5) and the working mixture (6) in the second position (16);
- an actuator (4) capable of moving the movable means (3) from the first position (15) to the second position (16) and vice versa;
- at least one cylinder (9) comprising at least one piston (10), the said piston (10) being different from the movable means (3) and the actuator (4), a chamber (11) of the said cylinder (9) being fluidly connected to the housing (2,8), so as to be in contact with the working mixture (6) **characterized in that** the motor is configured so that the temperature and pressure conditions applied to the liquid (5) during the operation of the said motor remain below the temperature and pressure conditions so that the liquid does not boil.

2. A motor (1) according to the preceding claim, wherein the working mixture (6) is composed of at least one gas and the vapour from the liquid (5), the gas being different from the vapour and wherein preferably for a temperature increase the vapour pressure of the liquid increases the pressure of the working mixture faster than the pressure of the gas alone.

3. A motor (1) according to the preceding claim, in which for the same temperature increase, the vapour pressure of the liquid increases the pressure of the working mixture faster than the pressure of the gas alone.

4. A motor (1) according to claim 1 in which the second position (15) is configured so that the movable means (3) prevents or reduces the formation of vapour from the liquid (5) and wherein preferably, in the first position, the movable means (3) minimizes the volume of the heat exchange between the working mixture (6) and the at least one cooling wall (2, 8) and in the second position the movable means (3) maximizes the heat exchange volume between the working mixture (6) and the at least one cooling wall (2, 8).

5. A motor (1) according to any one of the preceding claims, in which the housing (2,7,8) comprises at least one housing portion within which there is liquid and in that the heat source (13) is in contact with the at least one heating wall (7) and heats the liquid contained in that portion of the housing.

6. A motor (1) according to the preceding claim, in which the at least one cooling wall (2,8) of the housing (2,7,8) and the first wall (19) of the movable means are conical with an axis substantially parallel to the displacement of the movable means (3).

7. A motor (1) according to any of the preceding claims, configured so that the temperature and pressure conditions applied to the liquid are such that for a given pressure, the temperature of the liquid (5) is between 1.0^{∗}Tli and 0.98^{∗}Teb, where Teb is the boiling temperature for that pressure and Tli is the liquefaction temperature for that pressure.

8. A motor (1) according to any of the above claims, configured so that the heat exchange volume between the liquid (5) and the working mixture (6) is greater in the first position than the heat exchange volume between the liquid (5) and the working mixture (6) in the second position.

9. A motor (1) according to any of the preceding claims, configured so that the movable means (3) is interposed between the at least one cooling wall (2, 8) and the working mixture (6) in the first position (15) and allows contact between the working mixture (6) and the at least one cooling wall (2, 8) in the second position (16).

10. A motor (1) according to the preceding claim, wherein the movable means (3) comprises a first wall (19) complementarily shaped to match the shape of the at least one cooling wall (2,8) and configured to cover at least a portion of the at least one cooling wall (2,8) in the first position (15) and to release or uncover at least a portion of the at least one cooling wall (2,8) in the second position (16).

11. A motor (1) according to either of the two preceding claims wherein the movable means (3) comprises a second wall (20) shaped to release or uncover at least part of the surface (17) of the liquid (5) in the first position (15) and to cover at least part of the surface (17) of the liquid (5) in the second position (16).

12. A motor (1) according to the preceding claim, wherein the movable means (3), in particular the first wall (19) and/or the second wall (20), has (have) a hollow shape and preferably the movable means (3), in particular the first wall (19) and/or the second wall (20) are made of a material lighter than steel, typically a carbon fibre material or a composite material.

13. A motor assembly comprising at least two motors (1) according to any one of the preceding claims, operating in phase opposition, wherein the moveable means (3) of said at least two motors are
mechanically linked in order to compensate for their respective moving masses.

14. A method of controlling a motor (1) according to any one of the foregoing claims in which throughout operation, temperature and pressure conditions are applied to the liquid (5) such that the liquid (5) does not boil.

15. A method according to the preceding claim, configured so that the temperature and pressure conditions applied to the liquid are such that for a given pressure, the temperature of the liquid is between 1.0^{∗}Tli and 0.98^{∗}Teb, where Teb is the boiling temperature for that pressure and Tli is the liquefaction temperature for that pressure.
